# EUROPEAN PATENT APPLICATION

(11) **EP 4 350 693 A2**
(43) Date of publication of application: **10.04.2024**
(21) Application number: 23219691.5
(22) Date of filing: 22.12.2023
(51) Int. Cl.: G10L 15/30, G10L 15/32, G10L 15/22, G10L 15/18

(54) **VOICE PROCESSING METHOD AND APPARATUS, COMPUTER DEVICE, AND STORAGE MEDIUM**

(30) Priority: 21.02.2023 CN 202310159633
(71) Applicant: Nio Technology (Anhui) Co., Ltd, Hefei City, Anhui 230601 (CN)
(72) Inventor: XIE, Xukang, Economic And Technological Development Zone Hefei City, Anhui, 230601 (CN); GUO, Wei, Economic And Technological Development Zone Hefei City, Anhui, 230601 (CN)
(74) Representative: v. Bezold & Partner Patentanwälte - PartG mbB

(57) **Abstract**

The disclosure relates to a voice processing method and apparatus, a computer device, and a storage medium. The method includes: displaying, in response to receiving a voice signal, a first recognition result of processing the voice signal by the terminal; transmitting the voice signal to a server to instruct the server to process the voice signal again based on a preset voice recognition model and an association between the accuracy of the voice recognition model and an intention category to obtain a second recognition result; and generating a task control instruction based on the first recognition result and the second recognition result. According to embodiments of the disclosure, the interaction experience of a user can be ensured, and the accuracy of a recognition result can be increased.

## Description

### TECHNICAL FIELD

The disclosure relates to the field of intelligent vehicle technologies, and in particular, to a voice processing method and apparatus, a computer device, a storage medium, and a computer program product.

### BACKGROUND

The development of intelligent vehicles brings more convenience to voice interaction between a user and a vehicle. However, in the related art, for a voice signal sent by the user, no response is made to the voice signal in time, or an intention corresponding to the voice signal is understood inaccurately. Therefore, in the related art, a voice interaction level is low, and user requirements are unlikely to be met.

### SUMMARY

In view of this, there is a need to provide a voice processing method and apparatus, a computer device, a storage medium, and a computer program product for the foregoing technical problems.

In a first aspect, the disclosure provides a voice processing method, including:
displaying, in response to receiving a voice signal, a first recognition result of processing the voice signal by the terminal;
transmitting the voice signal to a server to instruct the server to process the voice signal again based on a preset voice recognition model and an association between the accuracy of the voice recognition model and an intention category to obtain a second recognition result; and
generating a task control instruction based on the first recognition result and the second recognition result.

In a possible implementation, a plurality of the voice recognition models are provided, and processing, by the server, the voice signal again based on the preset voice recognition model and the association between the accuracy of the voice recognition model and the intention category to obtain the second recognition result includes:
inputting, by the server, the voice signal to each of the plurality of preset voice recognition models to obtain a plurality of corresponding initial second recognition results;
inputting the plurality of initial second recognition results to an intention recognition model, and outputting an intention result corresponding to each of the initial second recognition results;
if a preset number of the intention results are of the same intention category, determining, based on the association between the accuracy of the voice recognition model and the intention category, a voice recognition model that is matched with the intention category and that has the highest accuracy; and
determining an initial second recognition result from the voice recognition model with the highest accuracy as the second recognition result.

In a possible implementation, the method further includes posterior to obtaining a plurality of corresponding initial second recognition results:
if a preset number of the intention results are not of the same intention category, determining an initial second recognition result from a preset main voice recognition model as the second recognition result.

In a possible implementation, generating a task control instruction based on the first recognition result and the second recognition result includes:
receiving the second recognition result, and determining time of reception; and
if a delay between the time of transmission and the time of reception of the voice signal is less than or equal to a preset threshold, generating the task control instruction based on the second recognition result.

In a possible implementation, the method further includes posterior to receiving the second recognition result and determining the time of reception:
if the delay between the time of transmission and the time of reception of the voice signal is less than or equal to the preset threshold, replacing the displayed first recognition result with the second recognition result.

In a possible implementation, processing, by the server, the voice signal again based on the preset voice recognition model and the association between the accuracy of the voice recognition model and the intention category to obtain the second recognition result comprises:
determining, by the server, a target voice recognition model from the preset voice recognition model based on the preset voice recognition model and the association between the accuracy of the voice recognition model and the intention category;
obtaining an intermediate recognition result of recognizing the voice signal by the target voice recognition model; and
replacing, based on a preset mapping relationship between an original word and a target word, an original word in the intermediate recognition result with a corresponding target word to obtain the second recognition result.

In a possible implementation, displaying, in response to receiving a voice signal, a first recognition result of processing the voice signal by the terminal includes:
recognizing, in response to receiving the voice signal, the voice signal to obtain an initial first recognition result; and
correcting the initial first recognition result based on user preference information and contact list information that correspond to the terminal, to obtain the first recognition result.

In a second aspect, the disclosure further provides a voice processing apparatus, including:
a display module configured to display, in response to receiving a voice signal, a first recognition result of processing the voice signal by the terminal;
a processing module configured to transmit the voice signal to a server to instruct the server to process the voice signal again based on a preset voice recognition model and an association between the accuracy of the voice recognition model and an intention category to obtain a second recognition result; and
a generation module configured to generate a task control instruction based on the first recognition result and the second recognition result.

In a possible implementation, a plurality of the voice recognition models are provided, and each of the processing modules includes:
a first input submodule configured to input, by the server, the voice signal to each of the plurality of preset voice recognition models to obtain a plurality of corresponding initial second recognition results;
a second input submodule configured to input the plurality of initial second recognition results to an intention recognition model, and to output an intention result corresponding to each of the initial second recognition results;
a first determination submodule configured to if a preset number of the intention results are of the same intention category, determine, based on the association between the accuracy of the voice recognition model and the intention category, a voice recognition model that is matched with the intention category and that has the highest accuracy; and
a second determination submodule configured to determine an initial second recognition result from the voice recognition model with the highest accuracy as the second recognition result.

In a possible implementation, the processing module further includes:
a third determination submodule configured to if a preset number of intention results are of the same intention category, determining an initial second recognition result from a preset main voice recognition model as the second recognition result.

In a possible implementation, the generation module includes:
a receiving submodule configured to receive the second recognition result and determine time of reception; and
a generation submodule configured to if a delay between time of sending of the voice signal and the time of reception is less than or equal to a preset threshold, generate the task control instruction based on the second recognition result.

In a possible implementation, the display module further includes:
a display submodule configured to if the delay between the time of transmission and the time of reception of the voice signal is less than or equal to the preset threshold, replace the displayed first recognition result with the second recognition result.

In a possible implementation, the processing module includes:
a fourth determination submodule configured to determine, by the server, a target voice recognition model from the preset voice recognition model based on the preset voice recognition model and the association between the accuracy of the voice recognition model and the intention category;
an obtaining submodule configured to obtain an intermediate recognition result of recognizing the voice signal by the target voice recognition model; and
a first correction submodule configured to replace, based on a preset mapping relationship between an original word and a target word, an original word in the intermediate recognition result with a corresponding target word to obtain the second recognition result.

In a possible implementation, the display module includes:
a processing submodule configured to recognize, in response to receiving the voice signal, the voice signal to obtain an initial first recognition result; and
a second correction submodule configured to correct the initial first recognition result based on user preference information and contact list information that correspond to the terminal, to obtain the first recognition result.

In a third aspect, the disclosure further provides a computer device, including a memory having a computer program stored thereon, and a processor, wherein the computer program, when executed by the processor, causes the processor to carry out the method according to any one of the embodiments of the disclosure.

In a fourth aspect, the disclosure further provides a computer-readable storage medium. The computer-readable storage medium has a computer program stored thereon, wherein the computer program, when executed by a processor, causes the processor to carry out the method according to any one of the embodiments of the disclosure.

In a fifth aspect, the disclosure further provides a computer program product, including a computer program, which, when executed by a processor, causes the processor to carry out the method according to any one of the embodiments of the disclosure.

According to the voice processing method and apparatus, the computer device, the storage medium, and the computer program product, in the voice processing method, the first recognition result is displayed by the terminal. Since the first recognition result is obtained by processing by the terminal, during the processing, a display response rate is high, and good interaction experience is provided for a user. In addition, the voice signal is recognized again by the voice recognition model in the server, and the server comprises a plurality of voice recognition models and an association between corresponding accuracy and an intention category, such that advantages of the plurality of voice recognition models can be integrated, and the second recognition result is more accurate. Therefore, the task control instruction generated based on the second recognition result is more accurate.

### BRIEF DESCRIPTION OF DRAWINGS

FIG. 1 is a diagram of an application scenario of a voice processing method according to an embodiment;
FIG. 2 is a first schematic flowchart of a voice processing method according to an embodiment;
FIG. 3 is a second schematic flowchart of a voice processing method according to another embodiment;
FIG. 4 is a third schematic flowchart of a voice processing method according to another embodiment;
FIG. 5 is a fourth schematic flowchart of a voice processing method according to another embodiment;
FIG. 6 is a fifth schematic flowchart of a voice processing method according to another embodiment;
FIG. 7 is a block diagram of a structure of a voice processing apparatus according to an embodiment; and
FIG. 8 is a diagram of an internal structure of a computer device according to an embodiment.

### DESCRIPTION OF EMBODIMENTS

In order to make the objective, technical solutions, and advantages of the disclosure clearer, the disclosure is further described in detail below with reference to the accompanying drawings and the embodiments. It should be understood that the specific embodiments described herein are merely used to explain the disclosure and are not intended to limit the disclosure.

It should be noted that the terms "first", "second", and the like in the description, claims, and drawings of the disclosure are intended to distinguish between similar objects, and are not intended to describe a particular order or sequence. It should be understood that the data termed in such a way are interchangeable as appropriate, so that the embodiments of the disclosure described herein can be implemented in other orders than the order illustrated or described herein. Implementations described in the following exemplary embodiments do not represent all implementations consistent with the disclosure. Instead, the implementations are merely examples of an apparatus and a method that are described in the appended claims in detail and that are consistent with some aspects of the disclosure.

It should further be noted that user information (including but not limited to user device information, user profile, etc.) and data (including but not limited to data used for displaying, analysed data, etc.) involved in the embodiments of the disclosure are information and data authorized by a user or fully authorized by all parties. Obtaining, storage, use, and processing of the data in the technical solutions of the disclosure need to comply with the relevant provisions of national laws and regulations.

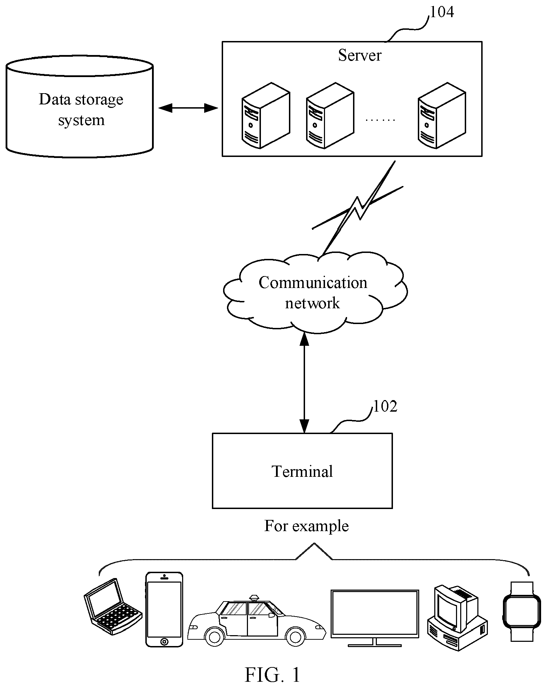

A voice processing method provided in the embodiments of the disclosure may be applied in an application scenario as shown in FIG. 1. A terminal 102 communicates with a server 104 through a network. A data storage system may store data to be processed by the server 104. The data storage system may be integrated in the server 104 or deployed in cloud or another network server. The terminal 102 may include but is not limited to various personal computers, notebook computers, smart phones, tablet computers, Internet of things devices, and portable wearable devices. The Internet of things device may be a smart speaker, a smart television, a smart air conditioner, a smart onboard device, or the like. The portable wearable device may be a smartwatch, a smart band, a head-mounted device, or the like. The server 104 may be implemented as an independent server or a server cluster including a plurality of servers.

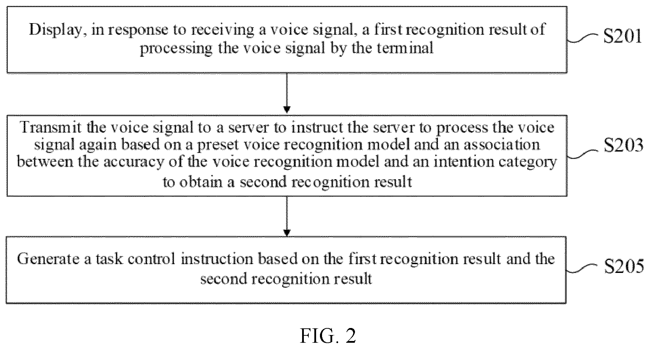

In an embodiment, a voice processing method is provided, as shown in FIG. 2. The application of the method to the terminal 102 in FIG. 1 is taken as an example for description. The method includes the following steps.

At step S201, a first recognition result of processing a voice signal by the terminal is displayed in response to receiving the voice signal.

Specifically, the received voice signal may include a voice signal received by the terminal, for example, a mobile terminal, a smart speaker terminal, or a vehicle. In the vehicle, a voice signal from a user in the vehicle may be received through a microphone sensor. In an exemplary embodiment, the user enables a voice interaction function of the terminal through preset wakeup words. In an exemplary embodiment, after receiving the voice signal, by means of a front-end echo cancellation and noise reduction (ECNR) module, the terminal may obtain a location of a voice signal source and perform noise and echo cancellation on the voice signal to enhance a human voice signal. High voice interaction quality can be achieved.

In this embodiment of the disclosure, the terminal processes the voice signal. In an exemplary embodiment, the processing may include some general processing on the voice signal to obtain the first recognition result, for example, converting the voice signal into "what you just said..." or some expressions or symbols, for example, a listening expression, to quickly respond to improve user experience. In another exemplary embodiment, the terminal may store some lightweight voice recognition models to process the voice signal to obtain the first recognition result. The accuracy of the first recognition result is lower than the accuracy of a second recognition result from a cloud server, so that the recognition efficiency is high and the first recognition result may be quickly displayed.

At step S203, the voice signal is transmitted to a server to instruct the server to process the voice signal again based on a preset voice recognition model and an association between the accuracy of the voice recognition model and an intention category to obtain the second recognition result.

Specifically, the server may include a cloud server. The voice recognition model in the server may include a more complex voice recognition model that may provide a recognition result with higher accuracy. In an exemplary embodiment, if the server includes one voice recognition model, the recognition accuracy of the voice recognition model is higher than the recognition accuracy of a voice recognition model of the terminal. In another exemplary embodiment, if the server includes a plurality of voice recognition models, an association between the accuracy of the voice recognition models and an intention category may be established. For example, for an intention category X, the accuracy of a model A is 60%, the accuracy of a model B is 70%, and the accuracy of a model C is 80%. For another example, there are preset 800 subdivided intentions in the vehicle field, the recognition accuracy of the model A is higher than the recognition accuracy of other models for (0 to 300) intentions, and is, for example, 80%, the recognition accuracy of the model B is higher than the recognition accuracy of other models for (200 to 600) intentions, and is, for example, 95%, and the recognition accuracy of the model C is higher than the recognition accuracy of other models for (600 to 800) intentions, and is, for example, 90%. In this way, a model with higher accuracy can be determined based on an intention category of a recognition result, and the second recognition result of processing the voice signal again by the model is selected.

At step S205, a task control instruction is generated based on the first recognition result and the second recognition result.

Specifically, the task control instruction may include converting a recognition result into a specific machine instruction, for example, "vehicle window", or "play Song XX". In an exemplary embodiment, a corresponding task control instruction may be generated based on the second recognition result with higher accuracy. Since the accuracy of the second recognition result is higher, the generated task control instruction is more accurate. In another exemplary embodiment, a preset delay may be set, and if the duration of calculation of the second recognition result is within the preset delay, the corresponding task control instruction is generated based on the second recognition result with higher accuracy.

In the voice processing method, the first recognition result is displayed by the terminal. Since the first recognition result is obtained by processing by the terminal, during the processing, a display response rate is high, and good interaction experience is provided for a user. In addition, the voice signal is recognized again by the voice recognition model in the server, and the server comprises a plurality of voice recognition models and an association between corresponding accuracy and an intention category, such that advantages of the plurality of voice recognition models can be integrated, and the second recognition result is more accurate. Therefore, the task control instruction generated based on the second recognition result is more accurate.

In a possible implementation, a plurality of the voice recognition models are provided, and processing, by the server, the voice signal again based on the preset voice recognition model and the association between the accuracy of the voice recognition model and the intention category to obtain the second recognition result includes:
inputting, by the server, the voice signal to each of the plurality of preset voice recognition models to obtain a plurality of corresponding initial second recognition results;
inputting the plurality of initial second recognition results to an intention recognition model, and outputting an intention result corresponding to each of the initial second recognition results;
if a preset number of the intention results are of the same intention category, determining, based on the association between the accuracy of the voice recognition model and the intention category, a voice recognition model that is matched with the intention category and that has the highest accuracy; and
determining an initial second recognition result from the voice recognition model with the highest accuracy as the second recognition result.

Specifically, in this embodiment of the disclosure, a plurality of the voice recognition models may be provided, for example, voice recognition models enabling cloud sharing and developed by different service providers, or different types of voice recognition models developed by the same service provider, or a combination thereof. The server inputs the voice signal to each of the plurality of preset voice recognition models to obtain a plurality of corresponding initial second recognition results. In an exemplary embodiment, the plurality of initial second recognition results are input to the intention recognition model, and an intention result corresponding to each initial second recognition result is output. The intention result may include a classification result of the initial second recognition results. The intention recognition model may be obtained by training an artificial neural network-based classification model.

In this embodiment of the disclosure, the preset number may be the total number of all voice recognition models, or a preset proportion of the total number, for example, 80%. The preset number of intention results are of the same intention category. For example, the initial second recognition results include: A: turn right; B: pull up on the right; and C: turn left. All of the initial second recognition results are of a navigation intention category, and the accuracy of a voice recognition model B for the navigation intention category is higher. Therefore, the second recognition result is an initial second recognition result from the voice recognition model B: pull up on the right. For another example, the initial second recognition results include: A: play a children's song; B: play second older brother; and C: play two songs. All of the initial second recognition results are of a leisure and entertainment intention category, and the accuracy of a voice recognition model A for the leisure and entertainment intention category is higher. Therefore, the second recognition result is an initial second recognition result from the voice recognition model A.

In an exemplary embodiment, the association between the accuracy of the voice recognition model and the intention category may further be updated. For example, when a test shows that for a specific intention, the effects of a service A are poorer than the effects of B, the intention may be redistributed to the service B.

In the previous embodiment, if the preset number of intention results are of the same intention category, the voice recognition model with high accuracy may be selected from the plurality of voice recognition models to increase the accuracy of voice recognition.

In a possible implementation, the method further includes posterior to obtaining a plurality of corresponding initial second recognition results:
if a preset number of the intention results are not of the same intention category, determining an initial second recognition result from a preset main voice recognition model as the second recognition result.

Specifically, if intention results from the plurality of voice recognition models differ greatly, for example, an initial second recognition result corresponding to A is of the leisure and entertainment intention category, an initial second recognition result corresponding to B is of a navigation intention category, and an initial second recognition result corresponding to C is of an Internet of things intention category, the initial second recognition result from the preset main voice recognition model may be used as a reference, for example, the voice recognition model B is set as the main voice recognition model. In this case, the second recognition result is determined as the navigation intention category. It should be noted that the recognition accuracy of the main voice recognition model is higher than the recognition accuracy of the terminal. The main voice recognition model may include a voice recognition model with a high overall performance.

In the previous embodiment, when the initial second recognition results differ greatly, the initial second recognition result from the preset main voice recognition model is used as the second recognition result. In this way, the accuracy of the recognition result can be increased to the maximum extent.

In a possible implementation, generating a task control instruction based on the first recognition result and the second recognition result includes:
receiving the second recognition result, and determining time of reception; and
if a delay between the time of transmission and the time of reception of the voice signal is less than or equal to a preset threshold, generating the task control instruction based on the second recognition result.

Specifically, the preset threshold may be determined according to a specific application scenario, and is, for example, 1 minute or 1.5 minutes. In an exemplary embodiment, the second recognition result is received, the time of reception is determined, and when the delay between the time of transmission and the time of reception of the voice signal is less than or equal to the preset threshold, the task control instruction is generated based on the second recognition result. In another exemplary embodiment, when the delay between the time of transmission and the time of reception of the voice signal is greater than the preset threshold, the task control instruction is generated based on the first recognition result.

In this embodiment of the disclosure, considering that some time may be needed in view of a network condition, a model calculation speed, etc., for example, for long time that is taken by the network condition or model calculation, a timeout mechanism is provided. If the second recognition result is not returned within a long period of time, the first recognition result is used; or if the second recognition result is returned within a short period of time, the second recognition result is used, thereby ensuring the user experience. It should be noted that the timeout mechanism is not limited to the case in which the delay between the time of transmission and the time of reception of the voice signal is less than or equal to the preset threshold in the previous embodiment, and the server may further monitor a calculation delay of the model, and when the delay is long and greater than the preset threshold, sends a timeout prompt to the terminal. Alternatively, the terminal may generate the task control instruction based on the first recognition result when not receiving the second recognition result within the preset threshold time. Those skilled in the art inspired by the technical essence of the disclosure may further make other changes, and all these changes shall fall within the scope of protection of the disclosure as long as functions and effects implemented by these changes are the same as or similar to those of the disclosure.

In a possible implementation, the method further includes posterior to receiving the second recognition result and determining the time of reception:
if the delay between the time of transmission and the time of reception of the voice signal is less than or equal to the preset threshold, replacing the displayed first recognition result with the second recognition result.

Specifically, when the delay between the time of transmission and the time of reception of the voice signal is less than or equal to the preset threshold, the displayed first recognition result is replaced with the second recognition result, and the second recognition result is displayed. For example, the first recognition result may be dynamically updated by replacing a specific word, a punctuation, etc., to finally stably display the second recognition result.

In the previous embodiment, the first recognition result is replaced with the second recognition result, and the second recognition result is displayed. This helps the user know the accuracy of the second recognition result in time.

In a possible implementation, processing, by the server, the voice signal again based on the preset voice recognition model and the association between the accuracy of the voice recognition model and the intention category to obtain the second recognition result comprises:
determining, by the server, a target voice recognition model from the preset voice recognition model based on the preset voice recognition model and the association between the accuracy of the voice recognition model and the intention category;
obtaining an intermediate recognition result of recognizing the voice signal by the target voice recognition model; and
replacing, based on a preset mapping relationship between an original word and a target word, an original word in the intermediate recognition result with a corresponding target word to obtain the second recognition result.

Specifically, the target voice recognition model may include the voice recognition model with high accuracy as described in the previous embodiment, or may include the main voice recognition model as described in the previous embodiment. The intermediate recognition result of the voice signal is obtained. The original word in the intermediate recognition result is replaced with a corresponding target word according to the preset mapping relationship between an original word and a target word. For example, "new radio" may be replaced with "XXX radio", and "to new power" may be replaced with "to XXX power". The target word may include a naming word associated with a component of the terminal. In an exemplary embodiment, a preset filtered word may further be provided. For example, when the intermediate recognition result includes "XX", the word is filtered.

In the previous embodiment, the mapping association between an original word and a target word is established, and the original word in the intermediate recognition result is replaced with a corresponding target word. This contributes to increasing the accuracy of a recognition result from a specific terminal.

In a possible implementation, displaying, in response to receiving a voice signal, a first recognition result of processing the voice signal by the terminal includes:
recognizing, in response to receiving the voice signal, the voice signal to obtain an initial first recognition result; and
correcting the initial first recognition result based on user preference information and contact list information that correspond to the terminal, to obtain the first recognition result.

Specifically, the user preference information may be analytically obtained based on historical usage data of the user. The contact list information may include an association between the user and another user, for example, a phone contact list and instant chat communication records. In this embodiment of the disclosure, recognition processing may be performed on the voice signal in response to receiving the voice signal according to the processing method of the terminal in the previous embodiment, to obtain the initial first recognition result.

In an exemplary embodiment, corresponding user preference information and contact list information may be stored in the terminal, and the initial first recognition result may be corrected based on the user preference information and the contact list information that correspond to the terminal. For example, a contact list of the user includes "Chang An", and the initial first recognition result includes: call Chang'an. In this case, the initial first recognition result is corrected based on the contact list information, including replacing "Chang'an" in the initial first recognition result with "Chang An". For another example, the user preference information includes listening to a Cantonese version of a song A, and the initial first recognition result is an English version of the song A. In this case, the initial first recognition result is corrected based on the user preference information, including replacing the English version of the song A in the initial first recognition result with the Cantonese version of the song A. In another exemplary embodiment, with authorization by the user, the user preference information and the contact list information may be uploaded to the server, and the server corrects the second recognition result according to the preference information and the contact list information.

In the previous embodiment, the initial first recognition result is corrected according to the user preference information and the contact list information, so that the obtained first recognition result can be more accurate.

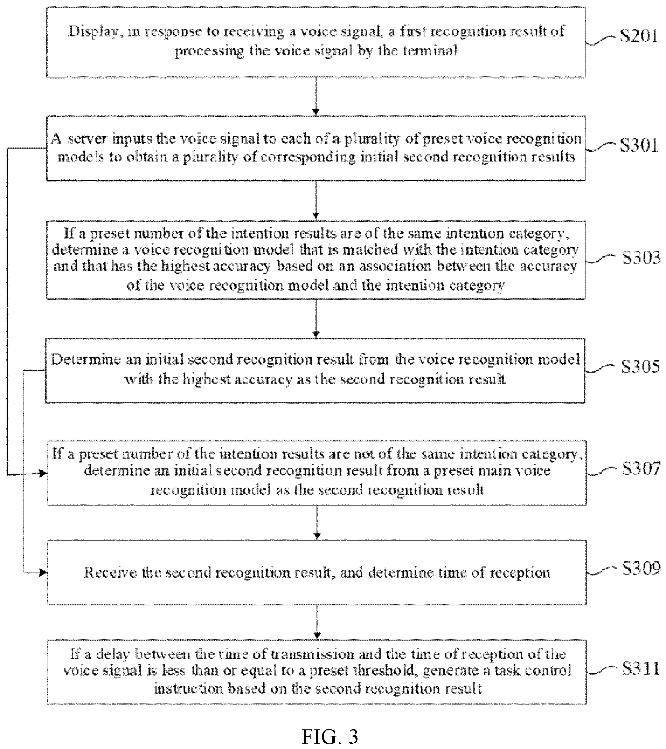

FIG. 3 is a second schematic flowchart of a voice processing method according to another embodiment. As shown in FIG. 3, the method includes the following steps.

At step S201, a first recognition result of processing a voice signal by the terminal is displayed in response to receiving the voice signal.

In this embodiment of the disclosure, the terminal processes the voice signal. In an exemplary embodiment, the processing may include some general processing on the voice signal to obtain the first recognition result, for example, converting the voice signal into "what you just said..." or some expressions or symbols, for example, a listening expression, to quickly respond to improve user experience. In another exemplary embodiment, the terminal may store some lightweight voice recognition models to process the voice signal to obtain the first recognition result. The accuracy of the first recognition result is lower than the accuracy of a second recognition result from a cloud server, so that the recognition efficiency is high and the first recognition result may be displayed.

At step S301, the server inputs the voice signal to each of the plurality of preset voice recognition models to obtain a plurality of corresponding initial second recognition results, inputs the plurality of initial second recognition results to an intention recognition model, and outputs an intention result corresponding to each initial second recognition result;

At step S303, if a preset number of the intention results are of the same intention category, a voice recognition model that is matched with the intention category and that has the highest accuracy is determined based on the association between the accuracy of the voice recognition model and the intention category.

At step S305, an initial second recognition result from the voice recognition model with the highest accuracy is determined as the second recognition result.

Specifically, in this embodiment of the disclosure, a plurality of the voice recognition models may be provided, for example, voice recognition models enabling cloud sharing and developed by different service providers, or different types of voice recognition models developed by the same service provider, or a combination thereof. The server inputs the voice signal to each of the plurality of preset voice recognition models to obtain a plurality of corresponding initial second recognition results.

In this embodiment of the disclosure, the preset number may be the total number of all voice recognition models, or a preset proportion of the total number, for example, 80%. If the preset number of intention results are of the same intention category, the voice recognition model with high accuracy may be selected from the plurality of voice recognition models to increase the accuracy of voice recognition.

At step S307, if a preset number of the intention results are not of the same intention category, an initial second recognition result from a preset main voice recognition model is determined as the second recognition result.

Specifically, if intention results from the plurality of voice recognition models differ greatly, for example, an initial second recognition result corresponding to A is of the leisure and entertainment intention category, an initial second recognition result corresponding to B is of a navigation intention category, and an initial second recognition result corresponding to C is of an Internet of things intention category, the initial second recognition result from the preset main voice recognition model may be used as a reference, for example, the voice recognition model B is set as the main voice recognition model. In this case, the second recognition result is determined as the navigation intention category. It should be noted that the recognition accuracy of the main voice recognition model is higher than the recognition accuracy of the terminal. The main voice recognition model may include a voice recognition model with a high overall performance.

At step S309, the second recognition result is received, and time of reception is determined.

At step S311, if a delay between the time of transmission and the time of reception of the voice signal is less than or equal to a preset threshold, the task control instruction is generated based on the second recognition result.

Specifically, the preset threshold may be determined according to a specific application scenario, and is, for example, 1 minute or 1.5 minutes. In an exemplary embodiment, the second recognition result is received, the time of reception is determined, and when the delay between the time of transmission and the time of reception of the voice signal is less than or equal to the preset threshold, the task control instruction is generated based on the second recognition result. In another exemplary embodiment, when the delay between the time of transmission and the time of reception of the voice signal is greater than the preset threshold, the task control instruction is generated based on the first recognition result.

In this embodiment of the disclosure, considering that some time may be needed in view of a network condition, a model calculation speed, etc., for example, for long time that is taken by the network condition or model calculation, a timeout mechanism is provided. If the second recognition result is not returned within a long period of time, the first recognition result is used; or if the second recognition result is returned within a short period of time, the second recognition result is used, thereby ensuring the user experience.

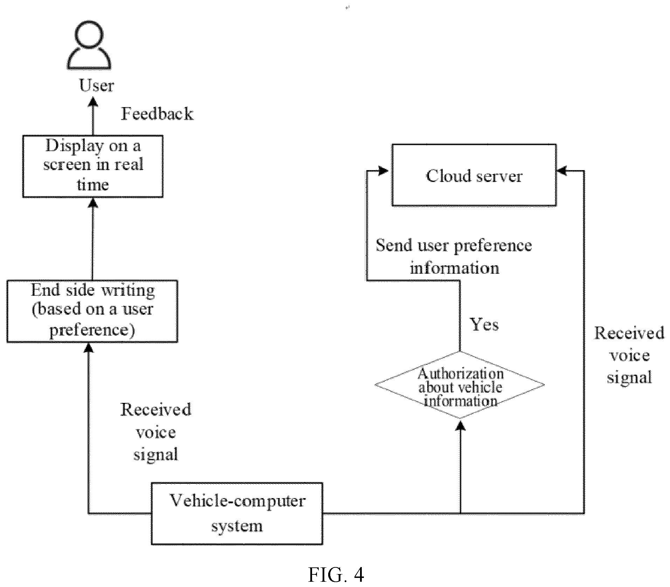

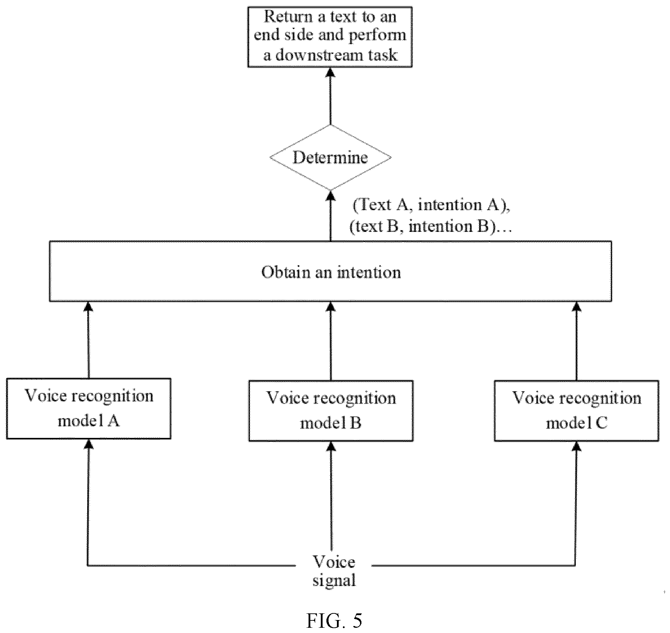

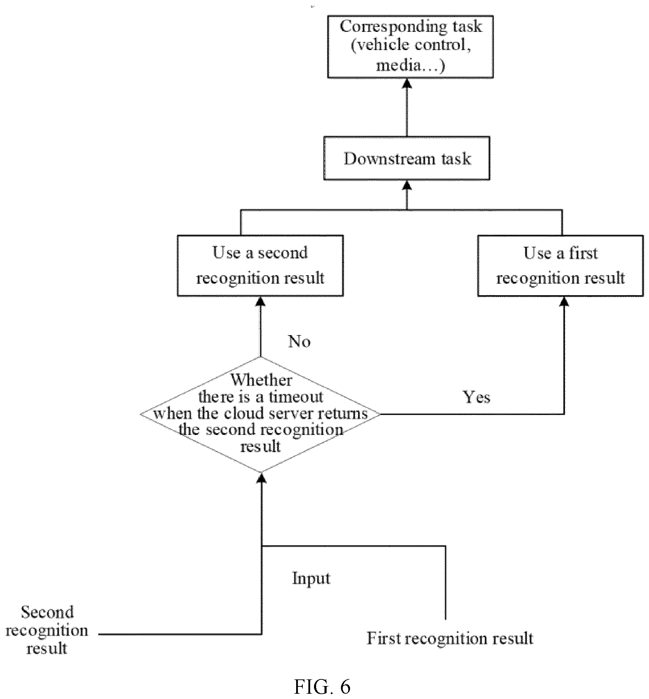

FIGS. 4-6 are schematic flowcharts of a voice processing method according to another embodiment. As shown in FIG. 4, a terminal may include a vehicle-computer system. The vehicle-computer system performs end side writing on a received voice signal, obtains a first recognition result according to a user preference (information), and displays the first recognition result on a screen in real time for a user to view. The vehicle-computer system transmits the received voice signal to a cloud server, and sends the user preference information to the cloud server under the authorization about vehicle information. As shown in FIG. 5, the cloud server recognizes the voice signal using a plurality of voice recognition models to obtain a plurality of initial second recognition results, inputs the plurality of initial second recognition results to an intention recognition model, and outputs an intention result corresponding to each initial second recognition result, for example: (text A, intention A), (text B, intention B)... The cloud server selects a second recognition result from a voice recognition model with high accuracy based on a category that the recognized intention result belongs to. A text in the second recognition result is sent to the terminal, and downstream task processing is performed. As shown in FIG. 6, a timeout mechanism is established. Whether there is a timeout when the cloud server returns the second recognition result is calculated. If yes, a downstream task corresponding to the first recognition result is assigned; or if not, a downstream task corresponding to the second recognition result is assigned.

It should be understood that although the steps in the flowcharts involved in the above embodiments are shown in sequence as indicated by the arrows, these steps are not necessarily executed in the order indicated by the arrows. Unless explicitly stated herein, there is no strict order restriction on the execution of these steps, and these steps can be executed in other orders. Moreover, at least some of the steps in the flowcharts involved in the above embodiments may include a plurality of steps or stages. These steps or stages are not necessarily executed at the same time, but may be executed at different times. The execution order of these steps or stages is not necessarily sequential, but they may be performed in turn or alternately with other steps or at least some of the steps or stages in other steps.

On the basis of the same inventive concept, an embodiment of the disclosure further provides a voice processing apparatus for implementing the voice processing method mentioned above. The solution provided by this apparatus to solve the problem is similar to that described in the above method. Therefore, for specific definitions in one or more voice processing apparatus embodiments provided below, reference may be made to the above definitions of the voice processing method, and details are not repeated herein.

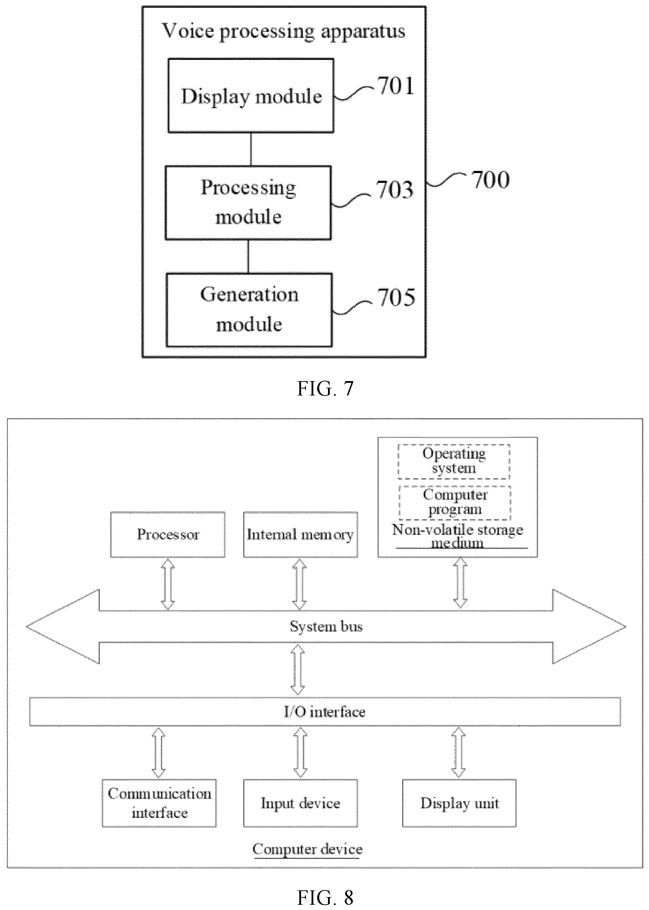

In an embodiment, as shown in FIG. 7, a voice processing apparatus is provided. The apparatus 700 includes:
a display module 701 configured to display, in response to receiving a voice signal, a first recognition result of processing the voice signal by the terminal;
a processing module 703 configured to transmit the voice signal to a server to instruct the server to process the voice signal again based on a preset voice recognition model and an association between the accuracy of the voice recognition model and an intention category to obtain a second recognition result; and
a generation module 705 configured to generate a task control instruction based on the first recognition result and the second recognition result.

In a possible implementation, a plurality of the voice recognition models are provided, and each of the processing modules includes:
a first input submodule configured to input, by the server, the voice signal to the plurality of preset voice recognition models respectively, to obtain a plurality of corresponding initial second recognition results;
a second input submodule configured to input the plurality of initial second recognition results to an intention recognition model, and to output an intention result corresponding to each of the initial second recognition results;
a first determination submodule configured to if a preset number of the intention results are of the same intention category, determine, based on the association between the accuracy of the voice recognition model and the intention category, a voice recognition model that is matched with the intention category and that has the highest accuracy; and
a second determination submodule configured to determine an initial second recognition result from the voice recognition model with the highest accuracy as the second recognition result.

In a possible implementation, the processing module further includes:
a third determination submodule configured to if a preset number of intention results are of the same intention category, determining an initial second recognition result from a preset main voice recognition model as the second recognition result.

In a possible implementation, the generation module includes:
a receiving submodule configured to receive the second recognition result and determine time of reception; and
a generation submodule configured to if a delay between time of sending of the voice signal and the time of reception is less than or equal to a preset threshold, generate the task control instruction based on the second recognition result.

In a possible implementation, the display module further includes:
a display submodule configured to if the delay between the time of transmission and the time of reception of the voice signal is less than or equal to the preset threshold, replace the displayed first recognition result with the second recognition result.

In a possible implementation, the processing module includes:
a fourth determination submodule configured to determine, by the server, a target voice recognition model from the preset voice recognition model based on the preset voice recognition model and the association between the accuracy of the voice recognition model and the intention category;
an obtaining submodule configured to obtain an intermediate recognition result of recognizing the voice signal by the target voice recognition model; and
a first correction submodule configured to replace, based on a preset mapping relationship between an original word and a target word, an original word in the intermediate recognition result with a corresponding target word to obtain the second recognition result.

In a possible implementation, the display module includes:
a processing submodule configured to recognize, in response to receiving the voice signal, the voice signal to obtain an initial first recognition result; and
a second correction submodule configured to correct the initial first recognition result based on user preference information and contact list information that correspond to the terminal, to obtain the first recognition result.

All or some of the modules in the foregoing voice processing apparatus may be implemented in software, hardware or a combination thereof. The modules may be embedded in or independent of a processor in a computer device in a form of hardware, or may be stored in a memory of a computer device in a form of software, so that the processor can invoke the modules to perform the operations corresponding to the modules.

In an embodiment, a computer device is provided. The computer device may be a terminal. FIG. 8 shows a diagram of an internal structure of the computer device. The computer device includes a processor, a memory, a communication interface, a display screen, and an input device that are connected by a system bus. The processor of the computer device is configured to provide computing and control capabilities. The memory of the computer device includes a non-volatile storage medium and an internal memory. An operating system and a computer program are stored in the non-volatile storage medium. The internal memory provides environment for running the operating system and the computer program in the non-volatile storage medium. The communication interface of the computer device is configured for wired or wireless communication with an external terminal. The wireless communication may be implemented by Wi-Fi, a mobile cellular network, near field communication (NFC), or other technology. The computer program, when executed by the processor, causes the processor to carry out a voice processing method. The display screen of the computer device may be a liquid crystal display screen or an e-ink display screen. The input apparatus of the computer device may be a touch layer covering the display screen, may be a button, a trackball, or a touchpad disposed on a housing of the computer device, or may be an external keyboard, touchpad, mouse, or the like.

Those skilled in the art can understand that the structure shown in FIG. 8 is only a block diagram of a partial structure related to the solution of the disclosure, and does not form a limitation on the computer device to which the solution of the disclosure is applied. The computer device may specifically include more or fewer components than those shown in the figure, some components are combined, or a different component arrangement is used.

It may be understood by those of ordinary skill in the art that all or some processes in the method of the previous embodiments may be completed by hardware instructed by a computer program. The computer program may be stored in a non-volatile computer-readable storage medium. When the computer program is executed, the processes in each previous method embodiment may be included. Any reference to the memory, the database or other media used in the embodiments provided in the disclosure may include at least one of non-volatile and volatile memories. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM), an external cache memory, and the like. As an illustration and not a limitation, the RAM may be in various forms, such as a static random access memory (SRAM) or a dynamic random access memory (DRAM). The database involved in the embodiments provided in the disclosure may include at least one of a relational database and a non-relational database. The non-relational database may include but is not limited to a blockchain-based distributed database, and the like. The processor involved in the embodiments provided in the disclosure may be but is not limited to a general-purpose processor, a central processing unit, a graphics processor, a digital signal processor, a programmable logic device, a quantum computing-based data processing logic device, and the like.

The technical features of the above embodiments can be combined in any manner, and in order to simplify the description, not all possible combinations of the technical features of the above embodiments are described. However, as long as there is no conflict between the combinations of these technical features, they should be considered to be within the scope of the description in the disclosure.

The embodiments described above merely illustrate several implementations of the disclosure and are described relatively specifically and in detail, but should not be construed as limiting the patent scope of the disclosure. It should be noted that several variations and improvements may also be made by those of ordinary skill in the art without departing from the concept of the disclosure, and should fall within the scope of protection of the disclosure. Therefore, the scope of protection of the disclosure shall be subject to the appended claims.

## Claims

1. A voice processing method applied to a terminal and comprising:
displaying, in response to receiving a voice signal, a first recognition result of processing the voice signal by the terminal;
transmitting the voice signal to a server to instruct the server to process the voice signal again based on a preset voice recognition model and an association between the accuracy of the voice recognition model and an intention category to obtain a second recognition result; and
generating a task control instruction based on the first recognition result and the second recognition result.

2. The method according to claim 1, wherein a plurality of the voice recognition models are provided, and processing, by the server, the voice signal again based on the preset voice recognition model and the association between the accuracy of the voice recognition model and the intention category to obtain the second recognition result comprises:
inputting, by the server, the voice signal to each of the plurality of preset voice recognition models to obtain a plurality of corresponding initial second recognition results;
inputting the plurality of initial second recognition results to an intention recognition model, and outputting an intention result corresponding to each of the initial second recognition results;
if a preset number of the intention results are of the same intention category, determining, based on the association between the accuracy of the voice recognition model and the intention category, a voice recognition model that is matched with the intention category and that has the highest accuracy; and
determining an initial second recognition result from the voice recognition model with the highest accuracy as the second recognition result.

3. The method according to claim 2, wherein the method further comprises posterior to obtaining a plurality of corresponding initial second recognition results:
if a preset number of the intention results are not of the same intention category, determining an initial second recognition result from a preset main voice recognition model as the second recognition result.

4. The method according to claim 1, wherein generating a task control instruction based on the first recognition result and the second recognition result comprises:
receiving the second recognition result, and determining time of reception; and
if a delay between the time of transmission and the time of reception of the voice signal is less than or equal to a preset threshold, generating the task control instruction based on the second recognition result.

5. The method according to claim 4, wherein the method further comprises posterior to receiving the second recognition result and determining the time of reception:
if the delay between the time of transmission and the time of reception of the voice signal is less than or equal to the preset threshold, replacing the displayed first recognition result with the second recognition result.

6. The method according to claim 1, wherein processing, by the server, the voice signal again based on the preset voice recognition model and the association between the accuracy of the voice recognition model and the intention category to obtain the second recognition result comprises:
determining, by the server, a target voice recognition model from the preset voice recognition model based on the preset voice recognition model and the association between the accuracy of the voice recognition model and the intention category;
obtaining an intermediate recognition result of recognizing the voice signal by the target voice recognition model; and
replacing, based on a preset mapping relationship between an original word and a target word, an original word in the intermediate recognition result with a corresponding target word to obtain the second recognition result.

7. The method according to claim 1, wherein displaying, in response to receiving a voice signal, a first recognition result of processing the voice signal by the terminal comprises:
recognizing, in response to receiving the voice signal, the voice signal to obtain an initial first recognition result; and
correcting the initial first recognition result based on user preference information and contact list information that correspond to the terminal, to obtain the first recognition result.

8. A voice processing apparatus, applied to a terminal and comprising:
a display module(701) configured to display, in response to receiving a voice signal, a first recognition result of processing the voice signal by the terminal;
a processing module(703) configured to transmit the voice signal to a server to instruct the server to process the voice signal again based on a preset voice recognition model and an association between the accuracy of the voice recognition model and an intention category to obtain a second recognition result; and
a generation module(705) configured to generate a task control instruction based on the first recognition result and the second recognition result.

9. The apparatus according to claim 8, wherein a plurality of the voice recognition models are provided, and each of the processing modules comprises:
a first input submodule configured to input, by the server, the voice signal to each of the plurality of preset voice recognition models to obtain a plurality of corresponding initial second recognition results;
a second input submodule configured to input the plurality of initial second recognition results to an intention recognition model, and to output an intention result corresponding to each of the initial second recognition results;
a first determination submodule configured to if a preset number of the intention results are of the same intention category, determine, based on the association between the accuracy of the voice recognition model and the intention category, a voice recognition model that is matched with the intention category and that has the highest accuracy; and
a second determination submodule configured to determine an initial second recognition result from the voice recognition model with the highest accuracy as the second recognition result.

10. The apparatus according to claim 9, wherein the processing module further comprises:
a third determination submodule configured to if a preset number of the intention results are not of the same intention category, determine an initial second recognition result from a preset main voice recognition model as the second recognition result.

11. The apparatus according to claim 8, wherein the generation module comprises:
a receiving submodule configured to receive the second recognition result and determine time of reception; and
a generation submodule configured to if a delay between time of sending of the voice signal and the time of reception is less than or equal to a preset threshold, generate the task control instruction based on the second recognition result.

12. The apparatus according to claim 11, wherein the display module further comprises:
a display submodule configured to if the delay between the time of transmission and the time of reception of the voice signal is less than or equal to the preset threshold, replace the displayed first recognition result with the second recognition result.

13. The apparatus according to claim 8, wherein the processing module comprises:
a fourth determination submodule configured to determine, by the server, a target voice recognition model from the preset voice recognition model based on the preset voice recognition model and the association between the accuracy of the voice recognition model and the intention category;
an obtaining submodule configured to obtain an intermediate recognition result of recognizing the voice signal by the target voice recognition model; and
a first correction submodule configured to replace, based on a preset mapping relationship between an original word and a target word, an original word in the intermediate recognition result with a corresponding target word to obtain the second recognition result.

14. The apparatus according to claim 8, wherein the display module comprises:
a processing submodule configured to recognize, in response to receiving the voice signal, the voice signal to obtain an initial first recognition result; and
a second correction submodule configured to correct the initial first recognition result based on user preference information and contact list information that correspond to the terminal, to obtain the first recognition result.

15. A computer device, comprising a memory having a computer program stored thereon, and a processor, wherein the computer program, when executed by the processor, causes the processor to carry out the steps of the method of any one of claims 1-7.

16. A computer-readable storage medium having a computer program stored thereon, wherein the computer program, when executed by the processor, causes the processor to carry out the steps of the method of any one of claims 1-7.

17. A computer program product, comprising a computer program, wherein the computer program, when executed by the processor, causes the processor to carry out the steps of the method of any one of claims 1-7.
